(19) Europäisches Patentamt
European Patent Office
Office européen des brevets

(11) **EP 2 006 711 A2**

(12) **EUROPEAN PATENT APPLICATION**
published in accordance with Art. 153(4) EPC

(43) Date of publication:
**24.12.2008 Bulletin 2008/52**

(21) Application number: **07737672.1**

(22) Date of filing: **02.03.2007**

(51) Int Cl.:
**G02B 5/02** (2006.01)    **B29C 41/12** (2006.01)
**G09F 9/00** (2006.01)

(86) International application number:
**PCT/JP2007/054024**

(87) International publication number:
**WO 2007/108294 (27.09.2007 Gazette 2007/39)**

(84) Designated Contracting States:
**DE FR GB IT**

(30) Priority: **16.03.2006 JP 2006073093**

(71) Applicant: **DAICEL CHEMICAL INDUSTRIES, LTD.**
**Osaka-shi, Osaka 530-0001 (JP)**

(72) Inventors:
• **TAKEMOTO, Hiroyuki**
**Fukuyama-shi, Hiroshima**
**720-0834 (JP)**

• **TAKAHASHI, Hiroshi**
**Himeji-shi, Hyogo**
**671-1283 (JP)**

(74) Representative: **Grünecker, Kinkeldey,**
**Stockmair & Schwanhäusser**
**Anwaltssozietät**
**Leopoldstrasse 4**
**80802 München (DE)**

(54)    **ANTI-DAZZLING FILM**

(57)    An anti-glare film comprising an anti-glare layer which comprises a matrix comprising a polymer, and a plurality of domains which are phase-separated from the matrix and comprise a polymer is prepared, and in the anti-glare film, the domains and the matrix form an uneven surface in the anti-glare layer, and the film varies an image clarity measured by an image clarity measuring apparatus provided with an optical slit depending on an installation direction of the film with respect to the optical slit. In the film, in an image clarity measured by an image clarity measuring apparatus provided with an optical slit of 0. 5 mmwidth, the difference (absolute value) of the image clarity before and after changing the installation direction of the film with respect to the optical slit by 90 degrees may be about 1 to 30. Such an anti-glare film can inhibit reflection of an exterior light or dazzle and makes a display image clear or sharp.

F I G. 1

EP 2 006 711 A2

**Description**

TECHNICAL FIELD

The present invention relates to an anti-glare film used in various displays (e.g., a liquid crystal display) for computers, word processors, televisions and others, a process for producing the same, and a display apparatus comprising (or equipped with) the anti-glare film.

BACKGROUND ART

Recently, various displays such as a liquid crystal display, a plasma display, an organic EL (electroluminescence) display, an inorganic EL display and a FED (field emission display) have been developed. In particular, remarkable progress as a display apparatus has been made in the liquid crystal display for television (TV) application or movie display application, and the liquid crystal display has been rapidly popularized. For example, the development of a liquid crystal material having a high-speed responsiveness or the improvement of a drive system such as overdrive has overcome conventional poor movie display in the liquid crystal, and the innovation of industrial technology corresponding to the increase in display size has progressed.

In these displays, a treatment for inhibiting reflection of an exterior light is usually subjected to a surface thereof in application that regards image quality as important (e.g., a television and a monitor) and application that uses in the open air with a strong exterior light (e.g., a video camera). One of the means is an anti-glare treatment. For example, a surface of a liquid crystal display is usually subjected to the anti-glare treatment. The anti-glare treatment forms a finely uneven structure on the surface of the display so as to have effects on scattering of a reflected light from the surface and blurring of a reflected image on the surface. Therefore, in the anti-glare layer, different from a clear anti-reflection film, since shapes of viewer and background are not reflected, the reflected light is hard to get in the way of a projected image (or screen image) on the display.

For example, Japanese Patent Application Laid-Open No. 337734/1999 (JP-11-337734A, Patent Document 1) discloses an antiglare-treated layer having an uneven structure on a surface thereof, the layer being used as a surface-treated layer formed on a surface of a polarizing film being preferable for a material of a liquid crystal cell. This document mentions that the antiglare-treated layer is formed by coating (e.g., spin-coating) a resin solution in which fine particles having a high refraction index are dispersed, or by coating (e.g., spin-coating) only an acrylic resin and then directly imparting irregularity to the surface mechanically or chemically.

Japanese Patent Application Laid-Open No. 215307/2001 (JP-2001-215307A, Patent Document 2) discloses an anti-glare layer containing a transparent fine particle having a mean particle size of 15 $\mu$m in a coat layer whose thickness is not less than twice of the mean particle size, wherein the anti-glare layer has a surface having a finely uneven structure through unevenly distributing the transparent fine particles in one side being in touch with air of the coat layer.

However, these anti-glare layers give an uneven structure on a film surface for imparting anti-glareness to the film, and enhances scattering of light from the surface accordingly. As a result, a part which originally appears to be black washes out (or becomes whitish) by incidence of the scattered light. That is, in a place where a strong exterior light shines, a screen becomes wholly whitish (whitening) and lacks contrast property. In particular, in the television (TV) application, the recent home theater boom serves as a tail wind for requirement of a contrasty projected image in which black is firmer. Further, in the process using such fine particles, it is difficult to produce an anti-glare layer which can impart anisotropy to a light-scattering direction.

Japanese Patent Application Laid-Open No. 27920/1995 (JP-7-27920A, Patent Document 3) discloses a polyethylene terephthalate film for attaching to a polarizing plate which is used for a surface of various displays such as word processors, computers and televisions, particularly liquid crystal displays, wherein the polyethylene terephthalate film is antiglare-treated by patterning of a pre-patterned film having a finely uneven structure on a surface thereof. This document describes that the anti-glare layer having a finely uneven structure on a surface thereof is obtained by coating an ionizing radiation-curable resin composition on the polyethylene terephthalate film, laminating a patterned matt film having a finely uneven structure on a surface thereof on the coated resin composition in the uncured state, irradiating ionizing radiation on the laminated matter to completely cure the coat, and separating the patterned matt film from the completely cured coat.

In a method using such a patterned film, however, it is difficult to form a finely uneven structure having anisotropy. Moreover, since it is difficult to produce such a matt patterned film itself, the anti-glare film is low in high-volume production capability. Further, it has been also known that such artificial impartment of a regular arrangement to the surface of the anti-glare layer unescapably brings about interference of the ref lected light, and then induces moire (formation of a rainbow pattern).

Japanese Patent Application Laid-Open No. 126495 /2004 (JP-2004-126495A, Patent Document 4) discloses an anti-glare film comprising at least an anti-glare layer, wherein the anti-glare layer has an uneven structure on a surface thereof, and the anti-glare film isotropically transmits and scatters an incident light to show the maximum value of the scattered light intensity at a scattering angle of 0.1 to 10°, and has a total light transmittance of 70 to 100%. This document describes that, in a process which comprises preparing a solution of at least one polymer and at least one curable resin precursor uniformly dissolved in a solvent and evaporating the solvent from the solution to produce a sheet, spinodal decomposition under an appropriate condition followed by curing the precursor ensures a phase-separation structure having regularity and an uneven surface structure corresponding to the phase-separation structure, and that attachment of such an anti-glare layer having a regular phase-separation structure to a display apparatus ensures a clear image quality without blur of characters and concurrently realizes good anti-glare effects without washing out or whitening (white blur). Further, this document mentions that attachment of the film to a high-definition display apparatus effectively eliminates dazzle in the display surface and ensures high-performance anti-glaring function.

However, since the anti-glare film scatters light isotropically, a scattered reflected-light causes deterioration in contrast property. Moreover, also in the process, it is difficult to control phase separability. Further, since slight variation of a lot number of material, a polymer formulation and other factors remarkably changes the size of the phase-separation structure, it is difficult to produce an anti-glare sheet stably.

Patent Document 1: JP-11-337734A (Claims 1, 4 and 8, and paragraph number [0001])
Patent Document 2: JP-2001-215307A (Claim 1, and paragraph number [0012])
Patent Document 3: JP-7-27920A (Claims 1 and 3, and paragraph numbers [0001] and [0020])
Patent Document 4: JP-2004-126495A (Claims 1 and 21, and paragraph number [0090])

DISCLOSURE OF THE INVENTION

PROBLEMS TO BE SOLVED BY THE INVENTION

It is therefore an object of the present invention to provide an anti-glare film which inhibits reflection of an exterior light or dazzle and makes a display image clear (or sharp), a process for producing the anti-glare film, and a display apparatus comprising (or equipped with) the anti-glare film.

It is another object of the present invention to provide an anti-glare film which reduces washing out or whitening (white blur) and makes a display image high contrast, a process for producing the anti-glare film, and a display apparatus comprising (or equipped with) the anti-glare film.

It is still another object of the present invention to provide an anti-glare film which is highinanti-glareness and inhibits formation of a rainbow pattern (moire) caused by interference of a reflected light, a process for producing the anti-glare film, and a display apparatus comprising (or equipped with) the anti-glare film.

It is a further object of the present invention to provide a process for efficiently and stably producing an anti-glare film which inhibits reflection of an exterior light or dazzle and makes a display image contrasty and clear (or sharp).

MEANS TO SOLVE THE PROBLEMS

The inventors of the present invention made intensive studies to achieve the above objects and finally found that a film having anisotropy in image clarity is prepared by forming an uneven part comprising a plurality of domains and a matrix by phase separation of polymers, and a variety of displays equipped with the film ensures a clear (or sharp) image display, in which reflection of an exterior light or dazzle is inhibited. The present invention was accomplished based on the above findings.

That is, the anti-glare film of the present invention comprises an anti-glare layer which comprises a matrix comprising a polymer, and a plurality of domains which are phase-separated from the matrix and comprise a polymer, wherein the domains and the matrix form an uneven surface in the anti-glare layer, and the film varies an image clarity measured by an image clarity measuring apparatus provided with an optical slit depending on an installation direction of the film with respect to the optical slit. For example, in an image clarity measured by an image clarity measuring apparatus provided with an optical slit of 0.5 mm width, the difference (absolute value) of the image clarity before and after changing the installation direction of the film with respect to the optical slit by 90 degrees may be about 1 to 30. The film may have anisotropy in a scattered intensity of a reflected light from the film surface. In the film, at least one uneven part (or site) generated by phase separation may be formed within the domain(s). The anti-glare layer may be a cured product of at least one polymer and at least one curable resin precursor. Moreover, the film may have an uneven surface formed (or hardened) by curing the curable resin precursor. The polymer may comprise a plurality of polymers capable of phase separation from each other [e.g., a cellulose derivative and at least one resin selected from the group consisting of a styrenic resin, a (meth)acrylic resin, an alicyclic olefinic resin, a polycarbonate-series resin, and a polyester-series resin] , and the curable resin precursor may be compatible with at least one polymer of the plurality of polymers.

At least one polymer of the plurality of polymers may have a functional group participating in a curing reaction of the curable resin precursor [e.g., a polymerizable group such as a (meth)acryloyl group]. The anti-glare film of the present invention may further comprise a support comprising a transparent polymer film, and the anti-glare layer may be formed on the support. Moreover, in the anti-glare film of the present invention, a resin layer having a low refraction index may be further formed on the anti-glare layer. The resin layer having a low refraction index may comprise a resin having a refraction index of 1.3 to 1.47. In the anti-glare film of the present invention, the total light transmittance may be about 70 to 100%, the haze may be about 1 to 30%, and the image (transmitted image) clarity measured by an image clarity measuring apparatus provided with an optical slit of 0.5 mm width may be about 10 to 70%. Moreover, in the anti-glare film of the present invention, when a light enters and penetrates the anti-glare film, part of the incident light may generate grating diffraction at an angle of 0.01 to 1°; and the ratio of a scattered light intensity at an emission angle of 30° ($I_{30}$) relative to a light intensity at an emission angle of 0° ($I_0$) in a scattered light profile ($I_{30}/I_0$) may be in the range of 0.00001 to 0.001%. Accordingly, the anti-glare film of the present invention is suitable for a display device or apparatus such as a liquid crystal display apparatus, a cathode ray tube display, an organic electroluminescence (EL) display, a field emission display, a surface-conduction electron-emitter display, a rear projection television display, a plasma display or a touch panel-equipped input device.

The present invention also includes a process for producing the anti-glare film, which comprises tilting a wet coating film comprising a solution containing at least one polymer, at least one curable resin precursor and a solvent with respect to the horizontal plane, and generating a cellular rotating convection in the wet coating film in a step for drying the wet coating film. The production process may be, particularly, a process which comprises coating a solution containing a plurality of polymers capable of phase separation from each other, at least one curable resin precursor and a solvent having a boiling point of not lower than 100°C on a support, placing the resulting wet coating film at a slope of 10 to 90 degrees with respect to the horizontal plane, then generating cellular rotating convection in the wet coating film in a step for drying the wet coating film, and then curing the coating film. Moreover, the solvent may comprise at least two solvent components with different boiling points. Further, the coating film may be cured by an action of at least one selected from the group consisting of an actinic ray and a thermic ray.

EFFECTS OF THE INVENTION

According to the present invention, since an uneven structure having anisotropy in image clarity is formed on the surface of the anti-glare film, various displays equipped with the film realizes display of a clear or sharp image in which reflection of an exterior light or dazzle is inhibited. Moreover, these displays can display a high-contrast image in which washing out or whitening (white blur) is reduced. Further, the film is high in anti-glareness and can inhibit formation of a rainbow pattern (moire) caused by interference of a reflected light. In particular, according to the present invention, an anti-glare film having such properties can be efficiently and stably produced. That is, since the present invention ensures convenient production of an excellent anti-glare film with a high productivity, the present invention is industrially advantageous.

BRIEF DESCRIPTION OF THE DRAWINGS

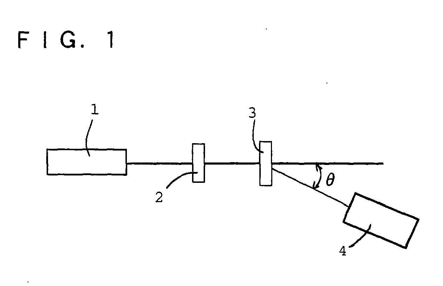

[Fig. 1] Fig. 1 is a schematic view illustrating an apparatus for measuring a transmitted scattering profile (an angle distribution of a transmitted scattered-light).

DETAILED DESCRIPTION OF THE INVENTION

[Anti-glare film]

The anti-glare film of the present invention comprises an anti-glare layer. The anti-glare layer is usually formed on a support. Moreover, on the anti-glare layer of the anti-glare film, a resin layer having a low refraction index (a low refraction index layer) may be further formed.

(Support)

As the support, there may be used a support having light transmittance properties, for example, a transparent support such as a synthetic resin film. Moreover, the support having light transmittance properties may comprise a transparent polymer film for forming an optical member.

As the transparent support (or substrate sheet), there may be exemplified a resin sheet in addition to glass and ceramics. As a resin constituting the transparent support, the resin similar to that of the after-mentioned anti-glare layer may be used. The preferred transparent support includes a transparent polymer film, for example, a film formed with a cellulose derivative [e.g., a cellulose acetate such as a cellulose triacetate (TAG) or a cellulose diacetate], a polyester-series resin [e.g., a polyethylene terephthalate (PET), a polybutylene terephthalate (PBT), and a polyarylate-seriesresin],a polysulfone-series resin [e.g., a polysulfone, and a polyether sulfone (PES)], a polyether ketone-series resin [e.g., a polyether ketone (PEK), and a polyether ether ketone (PEEK)], a polycarbonate-series resin (PC), a polyolefinic resin (e.g., a polyethylene, and a polypropylene), a cyclic polyolefinic resin (e.g., ARTON, ZEONEX), a halogen-containing resin (e.g., a polyvinylidene chloride), a (meth)acrylic resin, a styrenic resin (e.g., a polystyrene), a vinyl acetate-or vinyl alcohol-series resin (e.g., a polyvinyl alcohol) and others. The transparent support may be stretched monoaxially or biaxially, and the transparent support having optical isotropy is preferred. The preferred transparent support is a support sheet or film having a low birefringence index. The optically isotropic transparent support may include a non-stretched sheet or film, and for example, may include a sheet or film formed from a polyester (e.g., a PET, and a PBT), a cellulose ester, in particular a cellulose acetate (e.g., a cellulose acetate such as a cellulose diacetate or a cellulose triacetate, a cellulose acetate $C_{3-4}$acylate such as a cellulose acetate propionate or a cellulose acetate butyrate) or the like. The thickness of the support having a two-dimensional structure may be selected within the range of, for example, about 5 to 2000 $\mu$m, preferably about 15 to 1000 $\mu$m, and more preferably about 20 to 500 $\mu$m.

(Anti-glare layer)

The anti-glare layer comprises a polymer. In particular, in the present invention, a polymer and a curable resin precursor may be used in combination for improving abrasion resistance. In such a case, the anti-glare layer may comprise a cured product of at least one polymer and at least one curable resin precursor. The anti-glare layer produced by such a process provides a regular or periodic uneven surface in the film by curing the curable resin.

(1) Polymer component

As a polymer component, a thermoplastic resin is usually employed. As the thermoplastic resin, there may be exemplified a styrenic resin, a (meth)acrylic resin, an organic acid vinyl ester-series resin, a vinyl ether-series resin,a halogen-containing resin,an olefinic resin (including an alicyclic olefinic resin), a polycarbonate-series resin, a polyester-series resin, a polyamide-series resin, a thermoplastic polyurethane resin, a polysulfone-series resin (e.g., a polyether sulfone, and a polysulfone), a polyphenylene ether-series resin (e.g., a polymer of 2,6-xylenol), a cellulose derivative (e.g., a cellulose ester, a cellulose carbamate, and a cellulose ether), a silicone resin (e.g., a polydimethylsiloxane, and a polymethylphenylsiloxane), a rubber or elastomer (e.g., a diene-series rubber such as a polybutadiene or a polyisoprene, a styrene-butadiene copolymer, an acrylonitrile-butadiene copolymer, an acrylic rubber, a urethane rubber, and a silicone rubber), and the like. These thermoplastic resins may be used singly or in combination.

The styrenic resin may include a homo- or copolymer of a styrenic monomer (e.g. a polystyrene, a styrene-$\alpha$-methylstyrene copolymer, and a styrene-vinyl toluene copolymer) and a copolymer of a styrenic monomer and other polymerizable monomer [e.g., a (meth)acrylic monomer, maleic anhydride, a maleimide-series monomer, and a diene]. The styrenic copolymer may include, for example, a styrene-acrylonitrile copolymer (AS resin), a copolymer of styrene and a (meth)acrylic monomer [e.g., a styrene-methyl methacrylate copolymer, a styrene-methyl methacrylate-(meth) acrylate copolymer, and a styrene-methyl methacrylate- (meth) acrylic acid copolymer], and a styrene-maleic anhydride copolymer. The preferred styrenic resin includes a polystyrene, a copolymer of styrene and a (meth)acrylic monomer [e.g., a copolymer comprising styrene and methyl methacrylate as a main component, such as a styrene-methyl methacrylate copolymer], an AS resin, a styrene-butadiene copolymer and the like.

As the (meth)acrylic resin, a homo- or copolymer of a (meth)acrylic monomer, and a copolymer of a (meth) acrylic monomer and a copolymerizable monomer may be employed. As the (meth)acrylic monomer, there may be mentioned, for example, (meth)acrylic acid; a $C_{1-10}$alkyl (meth)acrylate such as methyl (meth)acrylate, ethyl (meth) acrylate, butyl (meth)acrylate, t-butyl (meth)acrylate, isobutyl (meth)acrylate, hexyl (meth)acrylate, octyl (meth)acrylate or 2-ethylhexyl (meth)acrylate; an aryl (meth)acrylate such as phenyl (meth)acrylate; a hydroxyalkyl (meth)acrylate such as hydroxyethyl (meth)acrylate or hydroxypropyl (meth)acrylate; glycidyl (meth)acrylate; an N,N-dialkylaminoalkyl (meth) acrylate; (meth)acrylonitrile; a (meth)acrylate having an alicyclic hydrocarbon group such as tricyclodecane. The copolymerizable monomer may include the above styrenic monomer, a vinyl ester-series monomer, maleic anhydride, maleic acid, and fumaric acid. These monomers may be used singly or in combination.

As the (meth)acrylic resin, there may be mentioned, for example, a poly(meth)acrylate such as a poly(methyl methacrylate), a methyl methacrylate-(meth)acrylic acid copolymer, a methyl methacrylate-(meth)acrylate copolymer, a methyl methacrylate-acrylate-(meth)acrylic acid copolymer, and a (meth)acrylate-styrene copolymer (MS resin). The preferred (meth)acrylic resin includes a methyl methacrylate-series resin containing a poly($C_{1-6}$alkyl (meth)acrylate) such as a poly(methyl (meth)acrylate), particularly methyl methacrylate, as a main component (about 50 to 100% by weight, and preferably about 70 to 100% by weight).

As the organic acid vinyl ester-series resin, there may be mentioned a homo- or copolymer of a vinyl ester-series monomer (e.g., a polyvinyl acetate, and a polyvinyl propionate), a copolymer of a vinyl ester-series monomer and a copolymerizable monomer (e.g., an ethylene-vinyl acetate copolymer, a vinyl acetate-vinyl chloride copolymer, and a vinyl acetate-(meth)acrylate copolymer), or a derivative thereof. The derivative of the vinyl ester-series resin may include a polyvinyl alcohol, an ethylene-vinyl alcohol copolymer, a polyvinyl acetal resin, and the like.

As the vinyl ether-series resin, a homo- or copolymer of a vinyl $C_{1-10}$alkyl ether such as vinyl methyl ether, vinyl ethyl ether, vinyl propyl ether or vinyl t-butyl ether, and a copolymer of a vinyl $C_{1-10}$alkyl ether and a copolymerizable monomer (e.g., a vinyl alkyl ether-maleic anhydride copolymer).

The halogen-containing resin may include a polyvinyl chloride, a polyvinylidene fluoride, a vinyl chloride-vinyl acetate copolymer, a vinyl chloride-(meth)acrylate copolymer, a vinylidene chloride-(meth)acrylate copolymer, and the like.

The olefinic resin may include, for example, an olefinic homopolymer such as a polyethylene or a polypropylene, and a copolymer such as an ethylene-vinyl acetate copolymer, an ethylene-vinyl alcohol copolymer, an ethylene-(meth) acrylic acid copolymer or an ethylene-(meth)acrylate copolymer. As the alicyclic olefinic resin, there may be mentioned a homo- or copolymer of a cyclic olefin such as norbornene or dicyclopentadiene (e.g., a polymer having an alicyclic hydrocarbon group such as tricyclodecane which is sterically rigid), a copolymer of the cyclic olefin and a copolymerizable monomer (e.g., an ethylene-norbornene copolymer, and a propylene-norbornene copolymer). The alicyclic olefinic resin is available as, for example, the trade name "ARTON", the trade name "ZEONEX" and the like.

The polycarbonate-series resin may include an aromatic polycarbonate based on a bisphenol (e.g., bisphenol A), an aliphatic polycarbonate such as diethylene glycol bisallyl carbonate, and others.

The polyester-series resin may include an aromatic polyester obtainable from an aromatic dicarboxylic acid such as terephthalic acid [for example, a homopolyester, e.g., a poly$C_{2-4}$alkylene terephthalate such as a polyethylene terephthalate or a polybutylene terephthalate, a poly$C_{2-4}$alkylene naphthalate, and a copolyester comprising a $C_{2-4}$alkylene arylate unit (a $C_{2-4}$alkylene terephthalate unit and/or a $C_{2-4}$alkylene naphthalate unit) as a main component (e.g., not less than 50% by weight)]. The copolyester may include a copolyester in which, in constituting units of a poly$C_{2-4}$alkylene arylate, part of $C_{2-4}$alkylene glycols is substituted with a polyoxy$C_{2-4}$alkylene glycol, a $C_{6-10}$alkylene glycol, an alicyclic diol (e.g., cyclohexane dimethanol, and hydrogenated bisphenol A), a diol having an aromatic ring (e.g., 9,9-bis (4-(2-hydroxyethoxy)phenyl) fluorene having a fluorenone side chain, a bisphenol A, a bisphenol A-alkylene oxide adduct) or the like, and a copolyester in which, in constituting units, part of aromatic dicarboxylic acids is substituted with an unsymmetric aromatic dicarboxylic acid such as phthalic acid or isophthalic acid, an aliphatic $C_{6-12}$dicarboxylic acid such as adipic acid, or the like. The polyester-series resin may also include a polyarylate-series resin, an aliphatic polyester obtainable from an aliphatic dicarboxylic acid such as adipic acid, and a homo- or copolymer of a lactone such as ε-caprolactone. The preferred polyester-series resin is usually a non-crystalline resin, such as a non-crystalline copolyester (e.g., a $C_{2-4}$alkylene arylate-series copolyester).

The polyamide-series resin may include an aliphatic polyamide such as nylon 46, nylon 6, nylon 66, nylon 610, nylon 612, nylon 11 or nylon 12, and a polyamide obtainable from a dicarboxylic acid (e.g., terephthalic acid, isophthalic acid, and adipic acid) and a diamine (e.g., hexamethylenediamine, and metaxylylenediamine). The polyamide-series resin may be a homo- or copolymer of a lactam such as ε-caprolactam, and is not limited to a homopolyamide but may be a copolyamide.

Among the cellulose derivatives, the cellulose ester may include, for example, an aliphatic organic acid ester of a cellulose (e.g., a $C_{1-6}$oraganic acid ester of a cellulose such as a cellulose acetate (e.g., a cellulose diacetate, and a cellulose triacetate), a cellulose propionate, a cellulose butyrate, a cellulose acetate propionate, or a cellulose acetate butyrate), an aromatic organic acid ester of a cellulose (e.g. a $C_{7-12}$aromatic carboxylic acid ester of a cellulose such as a cellulose phthalate or a cellulose benzoate) , an inorganic acid ester of a cellulose (e.g., a cellulose phosphate, and a cellulose sulfate), and may be a mixed acid ester of a cellulose such as a cellulose acetate nitrate. The cellulose derivative may also include a cellulose carbamate (e.g. a cellulose phenylcarbamate), a cellulose ether (e.g., a cyanoethylcellulose; a hydroxy$C_{2-4}$alkyl cellulose such as a hydroxyethyl cellulose or a hydroxypropyl cellulose; a $C_{1-6}$alkyl cellulose such as a methyl cellulose or an ethyl cellulose; a carboxymethyl cellulose or a salt thereof, a benzyl cellulose, and an acetyl alkyl cellulose).

The preferred thermoplastic resin includes, for example, a styrenic resin, a (meth)acrylic resin, a vinyl acetate-series resin, a vinyl ether-series resin, a halogen-containing resin, an alicyclic olefinic resin, a polycarbonate-series resin, a polyester-series resin, a polyamide-series resin, a cellulose derivative, a silicone-series resin, and a rubber or elastomer, and the like. As the thermoplastic resin, there is usually employed a resin which is non-crystalline and is soluble in an organic solvent (particularly a common solvent for dissolving a plurality of polymers and curable compounds). In particular, a resin which is excellent in moldability or film-forming (film-formable) properties, transparency, and weather resistance [for example, a styrenic resin, a (meth)acrylic resin, an alicyclic olefinic resin, a polyester-series resin, and a cellulose derivative (e.g., a cellulose ester)] is preferred. In particular, in the present invention, the cellulose derivative is preferred as the thermoplastic resin. Since the cellulose derivative is a semisynthetic polymer and is different in dissolution behavior from other resin or a curable resin precursor, the cellulose derivative has very good phase separability.

As the polymer (or thermoplastic resin), there may be also used a polymer having a functional group participating (or reacting) in a curing reaction (or a functional group capable of reacting with the curable precursor). Such a polymer may have the functional group in a main chain thereof, or in a side chain thereof. The functional group may be introduced into a main chain of the polymer with co-polymerization, co-condensation or the like, and is usually introduced into a side chain of the polymer. Such a functional group may include a condensable or reactive functional group (for example, a hydroxyl group, an acid anhydride group, a carboxyl group, an amino or imino group, an epoxy group, a glycidyl group, and an isocyanate group), a polymerizable functional group [for example, a $C_{2-6}$alkenyl group such as vinyl, propenyl, isopropenyl, butenyl or allyl, a $C_{2-6}$alkynyl group such as ethynyl, propynyl or butynyl, a $C_{2-6}$alkenylidene group such as vinylidene, or a functional group having the polymerizable functional group(s) (e.g., (meth)acryloyl group)], and others. Among these functional groups, the polymerizable functional group is preferred.

The thermoplastic resin having a polymerizable group in a side chain thereof may for example be produced by allowing to react (i) a thermoplastic resin having a reactive group (e.g., a group similar to the functional group exemplified in the paragraph of the condensable or reactive functional group) with (ii) a compound (polymerizable compound) having a group (reactive group) reactive to the reactive group of the thermoplastic resin, and a polymerizable functional group to introduce the polymerizable functional group of the compound (ii) into the thermoplastic resin.

Examples of the thermoplastic resin (i) having the reactive group may include a thermoplastic resin having a carboxyl group or an acid anhydride group thereof [for example, a (meth)acrylic resin (e.g., a (meth)acrylic acid-(meth) acrylate copolymer such as a methyl methacrylate-(meth)acrylic acid copolymer, and a methyl methacrylate-acrylate-(meth)acrylic acid copolymer), a polyester-series resin or polyamide-series resin having a terminal carboxyl group], a thermoplastic resin having a hydroxyl group [for example, a (meth)acrylic resin (e.g., a (meth)acrylate-hydroxyalkyl (meth)acrylate copolymer), a polyester-series resin or polyurethane-series resin having a terminal hydroxyl group, a cellulose derivative (e.g., a hydroxy$C_{2-4}$alkyl cellulose such as a hydroxyethyl cellulose or a hydroxypropyl cellulose),a polyamide-series resin (e.g., an N-methylolacrylamide copolymer)], a thermoplastic resin having an amino group (e.g., a polyamide-series resin having a terminal amino group), and a thermoplastic resin having an epoxy group [e.g., a (meth) acrylic resin or polyester-series resin having an epoxy group (such as a glycidyl group)]. Moreover, as the thermoplastic resin (i) having the reactive group, there may be used a resin obtained by introducing the reactive group into a thermoplastic resin (such as a styrenic resin or an olefinic resin, and an alicyclic olefinic resin) with co-polymerization or graft polymerization. Among these thermoplastic resins (i), a thermoplastic resin having a carboxyl group or an acid anhydride group thereof, a hydroxyl group or a glycidyl group (particularly a carboxyl group or an acid anhydride group thereof), as a reactive group, is preferred. Incidentally, among the (meth)acrylic resins, the copolymer preferably contains (meth)acrylic acid at a proportion of not less than 50 mol%. These thermoplastic resins (i) may be used singly or in combination.

The reactive group of the polymerizable compound (ii) may include a group reactive to the reactive group of the thermoplastic resin (i), for example, may include a functional group similar to the condensable or reactive functional group exemplified in the paragraph of the functional group of the polymer mentioned above.

Examples of the polymerizable compound (ii) may include a polymerizable compound having an epoxy group [e.g., an epoxy group-containing (meth)acrylate (an epoxy$C_{3-8}$alkyl (meth)acrylate such as glycidyl (meth)acrylate or 1,2-epoxybutyl (meth)acrylate; an epoxycyclo$C_{5-8}$alkenyl (meth)acrylate such as epoxycyclohexenyl (meth)acrylate), and allyl glycidyl ether], a compound having a hydroxyl group [for example, a hydroxyl group-containing (meth)acrylate, e.g., a hydroxy$C_{2-4}$alkyl (meth)acrylate such as hydroxypropyl (meth)acrylate; a $C_{2-6}$alkylene glycol mono(meth)acrylate such as ethylene glycol mono(meth)acrylate], a polymerizable compound having an amino group [e.g., an amino group-containing (meth)acrylate (such as a $C_{3-6}$alkenylamine such as allylamine); an aminostyrene such as 4-aminostyrene or diaminostyrene], a polymerizable compound having an isocyanate group [e.g., a (poly)urethane (meth)acrylate, or vinylisocyanate], and a polymerizable compound having a carboxyl group or an acid anhydride group thereof [e.g., an unsaturated carboxylic acid or an anhydride thereof, such as (meth)acrylic acid or maleic anhydride]. These polymerizable compounds (ii) may be used singly or in combination.

Incidentally, the combination of the reactive group of the thermoplastic resin (i) with the reactive group of the polymerizable compound (ii) may include, for example, the following combinations.

(i-1) the reactive group of the thermoplastic resin (i): carboxyl group or acid anhydride group thereof,
the reactive group of the polymerizable compound (ii): epoxy group, hydroxyl group, amino group, isocyanate group;
(i-2) the reactive group of the thermoplastic resin (i): hydroxyl group,
the reactive group of the polymerizable compound (ii): carboxyl group or acid anhydride group thereof, isocyanate group;
(i-3) the reactive group of the thermoplastic resin (i): amino group,

the reactive group of the polymerizable compound (ii): carboxyl group or acid anhydride group thereof, epoxy group, isocyanate group; and

(i-4) the reactive group of the thermoplastic resin (i): epoxy group,

the reactive group of the polymerizable compound (ii): carboxyl group or acid anhydride group thereof, amino group.

Among the polymerizable compounds (ii), an epoxy group-containing polymerizable compound (such as an epoxy group-containing (meth)acrylate) is particularly preferred.

The functional group-containing polymer, e.g., a polymer in which a polymerizable unsaturated group is introduced into part of carboxyl groups in a (meth)acrylic resin, is for example available as "CYCLOMER-P" from Daicel Chemical Industries, Ltd. Incidentally, "CYCLOMER-P" is a (meth)acrylic polymer in which epoxy group(s) of 3,4-epoxycyclohexenylmethyl acrylate is allowed to react with part of carboxyl groups in a (meth)acrylic acid-(meth)acrylate copolymer for introducing photo-polymerizable unsaturated group (s) in the side chain.

The amount of the functional group (particularly the polymerizable group), which participates in (or associates with) a curing reaction and is introduced into the thermoplastic resin, is about 0. 001 to 10 mol, preferably about 0.01 to 5 mol and more preferably about 0.02 to 3 mol relative to 1 kg of the thermoplastic resin.

These polymers may be used in a suitable combination. That is, the polymer may comprise a plurality of polymers. The plurality of polymers may be capable of phase separation from each other (in the absence of a solvent), or may be capable of phase separation in a liquid phase before complete evaporation of a solvent. Moreover, the plurality of polymers may be incompatible with each other. In the case of combining a plurality of polymers, the combination of a first polymer with a second polymer is not particularly limited, and a plurality of polymers incompatible with each other in the neighborhood of a processing temperature, for example two polymers incompatible with each other, may be used in a suitable combination. For example, in the case where the first polymer is a styrenic resin (e.g., a polystyrene, and a styrene-acrylonitrile copolymer), the second polymer may be a cellulose derivative (e.g., a cellulose ester such as a cellulose acetate propionate), a (meth) acrylic resin (e.g. , a poly(methyl methacrylate)), an alicyclic olefinic resin (e.g., a polymer obtained by using norbornene asa monomer),a polycarbonate-series resin, a polyester-series resin (e.g., the above-mentioned $polyC_{2-4}$alkylene arylate-series copolyester), and others. Moreover, for example, in the case where the first polymer is a cellulose derivative (e.g., a cellulose ester such as cellulose acetate propionate), the second polymer may be a styrenic resin (e.g., a polystyrene, and a styrene-acrylonitrile copolymer), a (meth)acrylic resin, an alicyclic olefinic resin (e.g., a polymer obtained by using norbornene asa monomer),a polycarbonate-seriesresin, a polyester-series resin (e.g., the above-mentioned $polyC_{2-4}$alkylene arylate-series copolyester), and others. In the combination of a plurality of resins, there may be used at least a cellulose ester (for example, a $C_{2-4}$aliphatic carboxylic acid ester of a cellulose such as a cellulose diacetate, a cellulose triacetate, a cellulose acetate propionate or a cellulose acetate butyrate).

The glass transition temperature of the polymer may for example be selected within the range of about -100°C to 250°C, preferably about -50°C to 230°C, andmorepreferably about 0°C to 200°C (for example, about 50°C to 180°C).

It is advantageous from the viewpoint of surface hardness that the glass transition temperature is not lower than 50°C (e.g., about 70°C to 200°C) and preferably not lower than 100°C (e.g., about 100°C to 170°C). The weight-average molecular weight of the polymer may for example be selected within the range of not more than 1,000,000, and preferably about 1,000 to 500,000.

An uneven surface having projections formed by rotating convection (for example, an uneven surface having projections due to phase-separation structure which is controlled in arrangement and size by convection cell) is finally cured by an actinic ray (e.g. , an ultraviolet ray, and an electron beam), a thermic ray, or others so that a cured resin is formed. Accordingly, such a cured resin can impart abrasion resistance (hardcoat property) to the anti-glare film, and can improve durability of the anti-glare film.

From the viewpoint of abrasion resistance after curing, at least one of the plurality of polymers, e.g., one of polymers incompatible with each other (in the case of using a first resin with a second resin in combination, particularly both polymers) is preferably a polymer having a functional group, reactive to the curable resin precursor, in a side chain thereof.

The ratio (weight ratio) of the first polymer relative to the second polymer [the former/the latter] may be, for example, selected within the range of about 1/99 to 99/1, preferably about 5/95 to 95/5 and more preferably about 10/90 to 90/10, and is usually about 20/80 to 80/20, particularly about 30/70 to 70/30. In particular, in the case of using a cellulose derivative as the first polymer, the ratio (weight ratio) of the first polymer relative to the second polymer [the former/the latter] is, for example, about 1/99 to 30/70, preferably about 5/95 to 28/72, and more preferably about 10/90 to 27/73 (particularly, about 15/85 to 25/75).

Incidentally, the polymer for forming a phase-separation structure may comprise the thermoplastic resin or other polymer (s) in addition to the above-mentioned two polymers incompatible with each other.

(2) Curable resin precursor

As the curable resin precursor, there may be used various curable compounds having a reactive functional group by a thermic ray or an actinic ray (e.g., an ultraviolet ray, and an electron beam), and being capable of forming a resin (particularly a cured or crosslinked resin) by curing or crosslinking with heat or an actinic ray.

For example, as the resin precursor, there may be mentioned a thermosetting compound or resin [a low molecular weight compound (or prepolymer such as a low molecular weight resin (e.g., an epoxy-series resin, an unsaturated polyester-series resin, a urethane-series resin, and a silicone-series resin)) having an epoxy group, an isocyanate group, an alkoxysilyl group, a silanol group, a polymerizable group (such as vinyl group, allyl group, and (meth)acryloyl group), or others], and a photo-curable compound which is curable with an actinic ray (such as ultraviolet ray) (e.g., an ultraviolet curable compound such as a photo-curable monomer, oligomer, or prepolymer). The photo-curable compound may be an EB (electron beam) curable compound, or others. Incidentally, a photo-curable compound such as a photo-curable monomer, a photo-curable oligomer, or a photo-curable resin which may have low molecular weight is sometimes simply referred to as "photo-curable resin". These curable resin precursors may be used singly or in combination.

The photo-curable compound usually has a photo-curable group, for example, a polymerizable group (e.g., vinyl group, allyl group, (meth)acryloyl group) or a photosensitive group (e.g., cinnamoyl group), and in particular, is preferably a photo-curable compound having a polymerizable group [e.g., a monomer, an oligomer (or resin, particularly a low molecular weight resin)]. These photo-curable compounds may be used singly or in combination.

Among the photo-curable compounds having a polymerizable group, as the monomer, for example, there may be exemplified a monofunctional monomer [for example, a (meth)acrylic monomer such as a (meth)acrylic ester, e.g., an alkyl (meth)acrylate (e.g., a $C_{1-6}$alkyl (meth)acrylate such as methyl (meth)acrylate), a cycloalkyl (meth)acrylate, a (meth)acrylate having a crosslinked cyclic hydrocarbon group (e.g., isobornyl (meth)acrylate, and adamantyl (meth) acrylate), glycidyl (meth)acrylate; a vinyl-series monomer such as a vinyl ester (e.g., vinyl acetate) or vinylpyrrolidone], a polyfunctional monomer having at least two polymerizable unsaturated bonds [for example, an alkylene glycol di(meth) acrylate such as ethylene glycol di(meth)acrylate, propylene glycol di(meth)acrylate, butanediol di(meth)acrylate, neopentyl glycol di(meth)acrylate, or hexanediol di(meth)acrylate; a (poly)oxyalkylene glycol di(meth)acrylate such as diethylene glycol di(meth)acrylate, dipropylene glycol di(meth)acrylate, or a polyoxytetramethylene glycol di(meth)acrylate; a di(meth)acrylate having a crosslinked cyclic hydrocarbon group (e.g., tricyclodecane dimethanol di(meth)acrylate, and adamantane di(meth)acrylate); and a polyfunctional monomer having about 3 to 6 polymerizable unsaturated bonds (e.g., trimethylol propane tri(meth)acrylate, trimethylol ethane tri(meth)acrylate, pentaerythritol tri(meth)acrylate, pentaerythritol tetra(meth)acrylate, and dipentaerythritol penta(meth)acrylate)].

Among the photo-curable compounds having a polymerizable group, examples of the oligomer or resin may include a (meth)acrylate of a bisphenol A added with an alkylene oxide, an epoxy (meth)acrylate (e.g., a bisphenol A-based epoxy (meth)acrylate, and a novolak-based epoxy (meth)acrylate), a polyester (meth)acrylate (e.g., an aliphatic polyester-based (meth)acrylate, and an aromatic polyester-based (meth)acrylate), a (poly)urethane (meth)acrylate (e.g., a polyester-based urethane (meth)acrylate, and a polyether-based urethane (meth)acrylate), a silicone (meth)acrylate, and others.

The preferred curable resin precursor includes a photo-curable compound curable in a short time, for example, an ultraviolet curable compound (e.g., a monomer, an oligomer, and a resin which may be a low molecular weight resin), and an EB curable compound. In particular, a practically advantageous resin precursor is an ultraviolet curable monomer, or an ultraviolet curable resin. Further, to improve resistance such as abrasion resistance, the photo-curable resin is preferably a compound having polymerizable unsaturated bonds of not less than 2 (preferably about 2 to 6, and more preferably about 2 to 4) in the molecule.

The molecular weight of the curable resin precursor is, allowing for compatibility to the polymer, not more than about 5000 (e.g., about 100 to 5000), preferably not more than about 2000 (e.g., about 150 to 2000), and more preferably not more than about 1000 (e.g., about 200 to 1000).

The curable resin precursor may be used in combination with a curing agent depending on the variety. For example, a thermosetting resin precursor may be used in combination with a curing agent such as an amine or a polyfunctional carboxylic acid (or polycarboxylic acid), or a photo-curable resin precursor may be used in combination with a photopolymerization initiator.

As the photopolymerization initiator, there may be exemplified a conventional component, e.g., an acetophenone, a propiophenone, a benzyl, a benzoin, a benzophenone, a thioxanthone, an acylphosphine oxide, and others.

The content of the curing agent (such as a photo curing agent) relative to 100 parts by weight of the curable resin precursor is about 0.1 to 20 parts by weight, preferably about 0.5 to 10 parts by weight, and more preferably about 1 to 8 parts by weight (particularly about 1 to 5 parts by weight), and may be about 3 to 8 parts by weight.

Further, the curable resin precursor may contain a curing accelerator or a crosslinking agent. For example, the photo-curable resin precursor may be used in combination with a photo-curing accelerator, e.g., a tertiary amine (e.g., a dialkylaminobenzoic ester) or a phosphine-series photopolymerization accelerator.

In the present invention, among at least one polymer and at least one curable resin precursor, at least two components are preferably used in such a combination as they are phase-separated with each other in the neighborhood of a processing temperature. As such a combination, for example, there may be mentioned (a) a combination in which a plurality of polymers are incompatible with each other and form a phase separation, (b) a combination in which a polymer and a curable resin precursor are incompatible with each other and form a phase separation, (c) a combination in which a plurality of curable resin precursors are incompatible with each other and form a phase separation, and other combinations. Among these combinations, (a) the combination of a plurality of polymers or (b) the combination of a polymer with a curable resin precursor is usually employed, and (a) the combination of a plurality of polymers is particularly preferred. In the case where both components to be phase-separated have high compatibility, both components fail to generate effective phase separation during a drying step for evaporating the solvent, and as a result the layer obtained therefrom deteriorates functions as an anti-glare layer.

Incidentally, the thermoplastic resin and the curable resin precursor (or cured resin) are usually incompatible with each other. When the polymer and the curable resin precursor are incompatible with each other and are phase-separated, a plurality of polymers may be used as the polymer. In the case of using a plurality of polymers, at least one polymer needs only to be incompatible with the resin precursor (or cured resin), and other polymer(s) may be compatible with the resin precursor.

Moreover, the above-mentioned combination may be a combination of two thermoplastic resins incompatible with each other and a curable compound (in particular a monomer or oligomer having a plurality of curable functional groups). Further, from the viewpoint of abrasion resistance after curing, one polymer of the above-mentioned incompatible thermoplastic resins (particularly both polymers) may be a thermoplastic resin having a functional group participating in a curing reaction (a functional group participating in curing of the curable resin precursor).

In the case where the polymer comprises a plurality of polymers incompatible with each other to form phase separation, it is preferred that the curable resin precursor is compatible with at least one polymer in the neighborhood of a processing temperature, among a plurality of polymers incompatible with each other. That is, when a plurality of polymers incompatible with each other comprise, for example, a first polymer and a second polymer, the curable resin precursor needs only to be compatible with at least one resin of the first polymer and the second polymer, or may be compatible with both polymer components. In the case where the curable resin precursor is compatible with both polymer components, at least two phases which are phase-separated may be obtained, one phase comprises a mixture containing the first polymer and the curable resin precursor as main components, and the other phase comprises a mixture containing the second polymer and the curable resin precursor as main components.

In the case where a plurality of polymers to be selected have high compatibility, the polymers fail to generate effective phase separation among themselves during a drying step for evaporating the solvent, and as a result the layer obtained therefrom deteriorates functions as an anti-glare film.

The curable monomer and a plurality of polymers incompatible with each other are used in such a combination that at least one polymer and the curable monomer are compatible with each other in the neighborhood of a processing temperature. That is, when a plurality of polymers incompatible with each other comprise, for example, a polymer A and a polymer B, the curable monomer needs only to be compatible with at least one of the polymer A and the polymer B, or may be preferably compatible with both polymer components. In the case where the curable monomer is compatible with both polymer components, at least two phases which are phase-separated are obtained, one phase comprises a mixture containing the polymer A and the curable monomer as main components, and the other phase comprises a mixture containing the polymer B and the curable monomer as main components.

Incidentally, each of the phase separability among a plurality of polymers, and the phase separability among the polymer and the curable monomer can be judged conveniently by visually conforming whether the residual solid content becomes clouded or not during a step of preparing a uniform solution with a good solvent to both components and gradually evaporating the solvent.

Further, the polymer and a cured or crosslinked resin obtained by curing the resin precursor are usually different from each other in refraction index. Moreover, the plurality of polymers (the first polymer and the second polymer) is also different from each other in refraction index. The difference in the refraction index between the polymer and the cured or crosslinked resin, or the difference in the refraction index between the plurality of polymers (the first polymer and the second polymer) may for example be about 0.001 to 0.2, and preferably about 0.05 to 0.15.

With the progress of the phase separation, the bicontinuous structure is formed. On further proceeding the phase separation, the continuous phase becomes discontinuous owing to its own surface tension to change into the droplet phase structure (e.g., an islands-in-the-sea structure containing independent phases such as ball-like shape, spherical shape, discotic shape, oval-sphere shape or rectangular prism shape). Therefore, an intermediate structure of the bicontinuous phase structure and the drop phase structure (i.e. , a phase structure in a transitional state from the bicontinuous phase to the drop phase) can also be formed by varying the degree of phase separation. The phase-separation structure in the anti-glare layer in the present invention may be an islands-in-the-sea structure (a droplet phase structure, or a phase structure in which one phase is independent or isolated) or a bicontinuous phase structure (or a mesh structure), or may be an intermediate structure being a coexistent state of a bicontinuous phase structure and a droplet phase structure. The phase-separation structure realizes the formation of a finely uneven structure on the surface of thus obtained anti-glare film after drying of the solvent.

Thus, the anti-glare layer having an uneven surface formed by phase separation contains no fine particle which leads to scattering in the interior of the layer, differently from an anti-glare layer obtained by a method which comprises dispersing a fine particle to form an uneven surface. Therefore, the haze in the interior of the layer (the internal haze leading to scattering in the interior of the layer) is low, for example, may be about 0 to 1%, preferably about 0 to 0.8% (e.g., about 0.01 to 0.8%), and more preferably about 0 to 0.5% (e.g., 0.1 to 0.5%). Incidentally, the internal haze can be determined by coating a resin layer on the anti-glare layer or pasting a smooth transparent film on the uneven surface of the anti-glare layer through a transparent adhesive layer so as to planarize the uneven surface of the anti-glare layer, and measuring a haze of the planarized matter.

In the phase-separation structure, it is advantageous from the viewpoint of forming the uneven surface structure and of enhancing the surface hardness that the structure forms a droplet phase structure having at least an island domain. Incidentally, when the phase-separation structure comprising a polymer and the above-mentioned precursor (or cured resin) forms an islands-in-the-sea structure, the polymer component may form a sea phase. It is however advantageous from the viewpoint of surface hardness that the polymer component forms island domains. The formation of the island domains realizes a finely uneven structure on the surface of thus obtained anti-glare layer after drying. In particular, in the present invention, the island domain may be a deformed (or irregular) shape (e.g., a long shape such as oval- sphere shape or rectangular prism shape) for having anisotropy in image clarity and light scattered intensity. Further, these deformed island domains may be partly united with each other to form a mountain range-like domain.

The ratio (weight ratio) of the polymer relative to the curable resin precursor is not particularly limited to a specific one, and for example, the polymer/the curable resin precursor may be selected within the range of about 5/95 to 95/5. From the viewpoint of surface hardness, the ratio (weight ratio) is preferably about 5/95 to 60/40, more preferably about 10/90 to 50/50, and particularly about 10/90 to 40/60. In particular, in the case of using a cellulose derivative in whole or part of the polymer, the ratio (weight ratio) of the polymer relative to the curable resin precursor [the former/the latter] is, for example, about 10/90 to 80/20, preferably about 20/80 to 70/30, and more preferably about 30/70 to 50/50.

The thickness of the anti-glare layer may for example be about 0.3 to 20 $\mu$m, preferably about 1 to 18 $\mu$m (e.g., about 3 to 16 $\mu$m), and usually about 5 to 15 $\mu$m (particularly about 7 to 13 $\mu$m).

(Low refraction index layer)

The low refraction index layer comprises a resin having a low refraction index (or a low refraction index resin). By laminating the low refraction index layer on at least one side of the anti-glare layer, when the low refraction index layer is disposed so that the layer becomes the top layer in an optical member or others, it can be effectively inhibited that an external light (e.g., an exterior light source) is reflected in the surface of the anti-glare film.

The refraction index of the low refraction index resin may for example be about 1.30 to 1.49, preferably about 1.36 to 1.49, and more preferably about 1.38 to 1.48.

Examples of the low refraction index resin may include a methylpentene resin, a diethylene glycol bis(allylcarbonate) resin, and a fluorine-containing resin such as a polyvinylidene fluoride (PVDF) or a polyvinylfluoride (PVF). Moreover, usually the low refraction index layer preferably contains a fluorine-containing compound. In the case of using the fluorine-containing compound, since the refraction index of the low refraction index layer can be reduced, the refraction index can be suitably selected.

The fluorine-containing compound may include a fluorine-containing resin precursor which has a fluorine atom, and a reactive functional group (e.g., a curable group such as a crosslinkable group or a polymerizable group) by heat or an actinic ray (e.g., an ultraviolet ray or an electron beam) or the like, and can be cured or crosslinked by heat or an actinic ray or the like to form a fluorine-containing resin (particularly a cured or crosslinked resin).

Examples of such a fluorine-containing resin precursor may include a fluorine atom-containing thermosetting compound or resin [a low molecular weight compound which has a fluorine atom, and a reactive group (e.g., an epoxy group, an isocyanate group, a carboxyl group, a hydroxyl group), a polymerizable group (e.g., a vinyl group, an allyl group, a (meth)acryloyl group) or others], a fluorine atom-containing photo-curable compound or resin which is curable by an actinic ray such as an ultraviolet ray (for example, an ultraviolet ray-curable compound such as a photo-curable fluorine-containing monomer or oligomer), and others.

As the thermosetting compound or resin, there may be mentioned, for example, a low molecular weight resin obtained by using at least a fluorine-containing monomer, e.g., an epoxy-series fluorine-containing resin obtained by using a fluorine-containing polyol (particularly a diol) instead of part or all of polyol components as a constituting monomer; in the same way, an unsaturated polyester-series fluorine-containing resin obtained by using a fluorine atom-containing polyol and/or fluorine atom-containing polycarboxylic acid component instead of part or all of polyol and/or polycarboxylic acid component(s); a urethane-series fluorine-containing resin obtained by using a fluorine atom-containing polyol and/or polyisocyanate component instead of part or all of polyol and/or polyisocyanate component(s); and others. These thermosetting compounds or resins may be used singly or in combination.

The photo-curable compound may include, for example, a monomer, an oligomer (or a resin, in particular a low molecular weight resin). Examples of the monomer may include a fluorine atom-containing monomer corresponding to the monofunctional monomer and polyfunctional monomer exemplified in the paragraph of the anti-glare layer mentioned above [e.g., a monofunctional monomer such as a fluorine atom-containing (meth)acrylic monomer (such as a fluorinated alkyl ester of (meth)acrylic acid), or a vinyl-series monomer (such as a fluoroolefin); and a di(meth)acrylate of a fluorinated alkylene glycol such as 1-fluoro-1,2-di(meth)acryloyloxyethylenel. Moreover, as the oligomer or resin, a fluorine atom-containing oligomer or resin corresponding to the oligomer or resin exemplified in the paragraph of the anti-glare layer may be used. These photo-curable compounds may be used singly or in combination.

The curable precursor for the fluorine-containing resin is, for example, procurable in the form of a liquid solution (coating liquid). For example, such a coating liquid may be available as "TT1006A" and "JN7215" manufactured by Japan Synthetic Rubber Co. , Ltd., "DEFENSA TR-330" manufactured by Dainippon Ink And Chemicals, Inc. , or others.

The thickness of the low refraction index layer may for example be about 0.05 to 2 $\mu$m, preferably about 0.06 to 1 $\mu$m (e. g. , about 0.08 to 0.5 $\mu$m), and more preferably about 0.1 to 0.3 $\mu$m.

(Anti-glare film)

In the anti-glare film of the present invention, the anti-glare layer comprises a plurality of domains and a matrix which are phase-separated from each other, and the domains and the matrix form an uneven surface. The domain is a closed uneven (loop) region, and usually, it is sufficient that the loop (exterior loop) is almost closed. Moreover, almost all of the domains may be independent, or some adjacent domains may be connected with each other through a long and slender (or narrow) connection part.

That is, in the present invention, the anti-glare film has an uneven surface formed as convection cells (exterior loops) at a relatively controlled interval corresponding to arrangement of convection cells. The uneven surface formed by cellular rotating convection usually has substantial regularity or periodicity. For example, the mean distance between two adjacent projections (Sm) may be about 20 to 300 $\mu$m, and is preferably about 25 to 250 $\mu$m and more preferably about 30 to 200 $\mu$m. The mean distance between two adjacent projections (Sm) is, for example, controllable by the thickness of the coating film when convection is generated.

As the surface roughness of the anti-glare film, the centerline average roughness (Ra) may be, for example, about 0.05 to 0.5 $\mu$m, preferably about 0.06 to 0.4 $\mu$m, and more preferably about 0.07 to 0.25 $\mu$m (particularly about 0.08 to 0.22 $\mu$m). Moreover, in the case where the anti-glare film has the low refraction index layer, it is preferred that the film having the coated low refraction index layer has a centerline average roughness in this range.

In particular, the anti-glare film of the present invention has anisotropy, and for example, the image (transmitted image) clarity measured by an image clarity measuring apparatus provided with an optical slit varies depending on an installation direction of the film with respect to the optical slit. Specifically, in the image clarity measured by an image clarity measuring apparatus provided with an optical slit of 0.5 mm width, the difference (absolute value) of the image clarity before and after changing the installation direction of the film with respect to the optical slit by 90 degrees may be, for example, about 1 to 30, preferably about 5 to 28, and more preferably about 10 to 26 (particularly about 15 to 25). Such a film is usually produced by tilting a wet coating film with respect to the horizontal plane as mentioned below. In the obtained film, probably because of anisotropy imparted by a gravitational action, the image clarity in the case of installing the film so that the direction parallel to the gravitated direction is parallel to the teeth direction of the optical slit is larger than that in the case of installing the film so that the direction parallel to the gravitated direction is perpendicular to the teeth direction of the optical slit.

The image clarity is a measure for quantifying defocusing or distortion of a light transmitted through a film. The image clarity is obtained by measuring a transmitted light from a film through a movable optical slit, and calculating amount of light in both a light part and a dark part of the optical slit. That is, in the case where a transmitted light is defocused by a film, the slit image formed on the optical slit becomes thicker, and as a result the amount of light in the transmitting part is not more than 100%. On the other hand, in the non-transmitting part, the amount of light is not less than 0% due to leakage of light. The value C of the image clarity is defined by the following formula according to the maximum value M of the transmitted light in the transparent part of the optical slit, and the minimumvalue m of the transmitted light in the opaque part thereof.

$$C(\%) = [(M-m)/(M+m)] \times 100$$

That is, the closer the value C comes to 100%, the lower the image defocusing depending on the anti-glare film is. [reference; Suga and Mitamura, Tosou Gijutsu, July, 1985].

As an apparatus for measuring the image clarity, there may be used an image clarity measuring apparatus (ICM-1DP, manufactured by Suga Test Instruments Co. , Ltd.). As the optical slit, there may be used an optical slit of 0.125 mm to 2 mm width.

In the same way, the anti-glare film of the present invention also has anisotropy in a scattered intensity of a reflected light from the film surface. That is, in the film obtained by the above-mentioned process, the scattered light intensity of the reflection from the film surface in the direction perpendicular to the gravitated direction is larger than that in the gravitated direction.

Further, on the anti-glare film of the present invention, an uneven surface is formed at an interval corresponding to the arrangement of convection in production of the anti-glare layer. Therefore, in a film comprising an anti-glare layer formed from cellular convection having a relatively high regularity, when a light enters the film, part of the transmitted light is diffracted corresponding to the arrangement state. The diffraction pattern of the anti-glare film of the present invention may be a pattern which has been known about the relationship between an arrangement and a diffraction pattern. Preferably, regarding the diffraction pattern, the scattered intensity may appear at two spots diagonally (at equal distances from the center and oppositely each other on the line containing the center).

Furthermore, in the anti-glare film of the present invention, at least one uneven part (internal cell) generated by phase separation may be formed within the domain. The uneven part may be formed as a raised part (minute raised region) protruded by a rising flow or a depressed part (minute depressed region) or caved by a rising flow at a position corresponding to a central part or peripheral part of the convection cell. This uneven part is also a closed loop (interior loop), and usually, the interior loop may be almost closed. Moreover, the interior loop is independent in many cases. Some adjacent loops may be connected with each other through a long and slender (or narrow) connection part. In particular, one to several (e.g., about 1 to 3) uneven part(s) (particularly punctiform raised part(s)) may be formed within one domain. The shape of the uneven part (interior loop) (the two-dimensional shape of the film surface, or the outline of the border between the interior loop and the exterior loop) is not particularly limited to a specific one, and is amorphous, a circular form, an oval form, a polygonal form, and others. The shape is usually a circular form or an oval form. Incidentally, in the case where a minute uneven part is formed inside each convection cell by a rising flow or phase-separation structure, the light scattering property of the film is improved, as a result, dazzle of a reflection image can be inhibited. Further, such a formation of a minute uneven part inside each convection cell is particularly preferred since each distance between interior loops of the cells becomes equally so that the domain forms a uniform uneven shape.

The size (diameter) of the interior loop (minute uneven part) may be, for example, about 3 to 150 $\mu$m, and is preferably about 5 to 100 $\mu$m and more preferably about 10 to 50 $\mu$m (particularly about 15 to 40 $\mu$m). The area ratio of the interior loop is about 1 to 80%, preferably about 3 to 50% and more preferably about 5 to 40% (particularly about 10 to 30%) relative to the exterior loop area.

When a light enters and penetrates the anti-glare film of the present invention, part of the incident light generates grating diffraction at a certain angle with respect to the incident light (about 0.3°) (diffraction angle). Specifically, such a diffraction angle is , for example, about 0.01 to 1°, preferably about 0.05 to 0.8°, and more preferably about 0.1 to 0.7° (particularly about 0.15 to 0.5°).

The total light transmittance of the anti-glare film of the present invention is, for example, about 70 to 100%, preferably about 80 to 99%, and more preferably about 85 to 98% (particularly, about 88 to 97%).

The haze of the anti-glare film of the present invention is about 1 to 50%, preferably about 2 to 40%, and more preferably about 3 to 35% (particularly, about 5 to 30%). Moreover, in the case where the film comprises the low refraction index layer coated on the anti-glare layer, the haze of the film shows a lowering of about 1 to 10% compared with that of a film comprising the anti-glare layer alone. The haze of a film comprising the anti-glare layer and the low refraction index layer in combination is, for example, about 1 to 30%, preferably about 2 to 25%, more preferably about 2 to 20%, and usually about 3 to 15%. In the case of forming the low refraction index layer, it is preferred to adjust the haze of the anti-glare layer in consideration of the lowering of the haze.

The haze and the total light transmittance can be measured with a NDH-300A haze meter manufactured by Nippon Denshoku Industries Co. , Ltd. in accordance with JIS K7105.

The image clarity of the anti-glare film of the present invention is, in the case of using an optical slit of 0.5 mm width, about 10 to 70%, preferably about 15 to 60% and more preferably about 20 to 50% (particularly about 25 to 45%). In the case of using an optical slit of 0.25 mm width, the image clarity is about 10 to 70%, preferably about 20 to 60% and more preferably about 25 to 50%. In the case where the image clarity is within the range, the outline (or contour) of reflection can be enough blurred so that excellent anti-glareness can be imparted to the film. Too high image clarity deteriorates an effect on inhibition of reflection. On the other hand, too small image clarity inhibits the above-mentioned reflection but deteriorates clearness (or sharpness) of image.

In the anti-glare film of the present invention, for achieving desired visibility (particularly, for improving sharpness of image), the ratio of the scattered light intensity at an emission angle of 30° ($I_{30}$) relative to the light intensity at an emission angle of 0° ($I_0$) in a scattered light profile ($I_{30}/I_0$) is adjusted to be within the range of 0.00001 to 0.001%. The ratio of the light scattered intensity ($I_{30}/I_0$) is preferably about 0.00003 to 0.0009%, and more preferably about 0.00005 to 0.0008% (particularly about 0.00007 to 0.0007%).

Further, in terms of improving image sharpness, the ratio of the scattered light intensity at an emission angle of 10° ($I_{10}$) relative to the light intensity at an emission angle of 0° ($I_0$) in a scattered light profile ($I_{10}/I_0$) is, for example, about 0.0001 to 0.1%, preferably about 0.0003 to 0.008%, and more preferably about 0.0005 to 0.005%.

The scattered light profile about the anti-glare film may be measured by using a goniophotometer, for example, a commercially available automatic goniophotometer (GP-200 type, manufactured by Murakami Color Research Laboratory). For example, the angle distribution of the light transmitted through the anti-glare film can be measured by means of a measuring equipment comprising a laser beam source 1 such as He-Ne laser, andabeamreceiver 4 set on a goniophotometer, as shown in Fig. 1. In the embodiment, the relationship between the scattered light intensity and the scattering angle θ is determined by irradiating a sample 3 with a laser beam from the laser beam source 1 through an ND filter 2, and detecting the scattered light from the sample by means of a detector (beam receiver) 4 which is capable of varying an angle at a scattering angle θ relative to a light path of the laser beam and comprises a photomultiplier. As such an equipment, an automatic measuring equipment for laser beam scatteration (manufactured by NEOARK Corporation) is utilizable.

[Process for producing anti-glare film]

The anti-glare film of the present invention may be produced by tilting a wet coating film which comprises a solution containing at least one polymer, at least one curable resin precursor and a solvent with respect to the horizontal plane, and generating a cellular rotating convection in the wet coating film in a step for drying the wet (undried) coating film. More specifically, the production may be usually carried out by coating the solution on a support, tilting the resulting wet coating film, and evaporating the solvent from the coating film. Further, the preferred process comprises coating a solution containing a plurality of polymers capable of phase separation from each other, at least one curable resin precursor and a solvent having a boiling point of not lower than 100°C on a support, placing the resulting wet coating film with the wet coating film tilted with respect to the horizontal plane, generating cellular rotating convection (convection cell) in the wet coating film in a step for drying the wet coating film, and then curing the coating film to give an anti-glare film. Incidentally, in the case of using a separable support as the support, the coating film may be released (or separated) from the support to give an anti-glare membrane.

(Cellular rotating convection)

In the present invention, the regular or periodic uneven surface is formed in the film by coating the solution, and raising the surface of the coating film by a cellular rotating convection. In general, evaporation of the solvent for dryness and cooling of near the surface of the coating film by vaporization heat induce a temperature difference beyond the criticality between the upper and lower layers of the coating film, as a result the rotating convection is generated. Such a convection is referred to as Benard convection. Moreover, Benard convection is discovered by Benard and theoretically systematized by Rayleigh, therefore the convection is also referred to as Benard-Rayleigh convection. The critical temperature difference (ΔT) is determined by the thickness of the coating film (d), the coefficient of kinematic viscosity of the coating film (solution) (ν), the thermal diffusibility of the coating film (κ), the coefficient of cubical expansion of the coating film (α) and the gravitational acceleration (g). The convection is generated when the Rayleigh number (Ra) defined by the following formula exceeds a certain critical value.

$$\mathrm{Ra} = (\alpha \cdot g \cdot \Delta T \cdot d^3)/(\kappa \cdot \nu)$$

The generated convection regularly repeats upstroke and downstroke so that the surface of the film has a regular or periodic unevenness arranged in a cell-like form. It is known that the aspect ratio of the cell (the coated direction/the thick direction) is about 2/1 to 3/1.

Moreover, the mode of the cellular rotating convection is not particularly limited to a specific one, and may be other convection mode. For example, the mode of the cellular rotating convection may be Marangoni convection (density convection) due to inhomogeneously distributed surface tension.

(Combination of convection and phase separation)

In the present invention, as mentioned above, the uneven surface is formed by generating rotating convection to give convection flow and concentration difference in solid content. Together with such convection, two components having phase separability from each other (at least two components among polymers and curable resin precursors) may be phase-separated by using a solution containing the components to form a phase-separation structure. Although the details of mechanism in combination of convection and phase separation are not yet elucidated, the mechanism can be presumed as follows.

By combining convection and phase separation, firstly convection cells are generated after coating. Next, phase separation is developed within each of the convection cells. The phase-separation structure grows to an enormous size with time, and the growth of the phase separation is stopped in the wall of the convection cell. As a result, the interval of the phase separation structure is controlled depending on the size and arrangement of the convection cell, and the phase-separation structure is accompanied by forming an uneven pattern (or part) having a good size and height. That is, an anti-glare film in which the shape, arrangement and size of the uneven pattern (or part) are sufficiently controlled can be obtained.

(Solvent)

In the present invention, the convection or phase separation may be conducted by evaporating the solvent from the solution containing the polymer and the curable resin precursor. In particular, among components contained in the solution, the solvent is absolutely necessary to generate convection stably. The reason is that the solvent has an action for lowering a surface temperature of a coating film by vaporization heat due to evaporation, and further has fluidity for flowing and circulating generated convection without stagnation.

The solvent may be selected depending on the species and solubility of the polymer and curable resin precursor to be used. In the case of a mixed solvent, at least one solvent component needs only to be a solvent for uniformly dissolving a solid content (a plurality of polymers and curable resin precursor(s), a reaction initiator, other additive(s)). As such a solvent, there may be mentioned, for example, a ketone (e.g. , acetone, methyl ethyl ketone, methyl isobutyl ketone,and cyclohexanone), an ether (e.g., dioxane, and tetrahydrofuran), an aliphatic hydrocarbon (e.g., hexane), an alicyclic hydrocarbon (e.g., cyclohexane), an aromatic hydrocarbon (e.g., toluene, and xylene), a carbon halide (e.g., dichloromethane, and dichloroethane), an ester (e.g., methyl acetate, ethyl acetate, and butyl acetate), water, an alcohol (e.g., ethanol, isopropanol, butanol, and cyclohexanol), a cellosolve (e.g., methyl cellosolve, and ethyl cellosolve), a cellosolve acetate, a sulfoxide (e.g., dimethyl sulfoxide), and an amide (e.g., dimethylformamide, and dimethyhlacetamide). These solvents may be used singly or in combination.

Incidentally, Japanese Patent Application Laid-Open No. 126495/2004 (JP-2004-126495A) discloses, as is the case with the present invention, a process for producing a sheet, which comprises evaporating a solvent from a solution containing at least one polymer and at least one curable resin precursor uniformly dissolved in the solvent, wherein an anti-glare layer is produced by spinodal decomposition under an appropriate condition followed by curing the precursor. Although this document discloses a process for forming an uneven surface of the anti-glare film by phase separation due to spinodal decomposition, there is no description about cellular rotating convection.

In the present invention, in order to generate such a convection cell, it is preferred to use a solvent having a boiling point of not lower than 100°C at an atmospheric pressure as a solvent. Further, to generate the convection cell, the solvent preferably comprises at least two solvent components with different boiling points. Moreover, the boiling point of the solvent component having a higher boiling point may be not lower than 100°C, and is usually about 100 to 200°C, preferably about 105 to 150°C and more preferably about 110 to 130°C. In particular, from the viewpoint of combining convection cell and phase separation, the solvent preferably comprises at least one solvent component having a boiling point of not lower than 100°C and at least one solvent component having a boiling point of lower than 100°C in combination. In the case of using such a mixed solvent, the solvent component having a lower boiling point generates a temperature difference between the upper and lower layers of the coating film due to evaporation, and the solvent component having a higher boiling point remains in the coating film resulting in keeping of fluidity.

The solvent (or solvent component) having a boiling point of not lower than 100°C at an atmospheric pressure may include, for example, an alcohol (e.g., a $C_{4-8}$alkyl alcohol such as butanol, pentyl alcohol or hexyl alcohol), an alkoxy alcohol (e.g., a $C_{1-6}$alkoxy$C_{2-6}$alkyl alcohol such as methoxypropanol or butoxyethanol), an alkylene glycol (e.g., a $C_{2-4}$alkylene glycol such as ethylene glycol or propylene glycol), and a ketone (e.g., cyclohexanone). These solvents may be used singly or in combination. Among them, a $C_{4-8}$alkyl alcohol such as butanol, a $C_{1-6}$alkoxy$C_{2-6}$alkyl alcohol such as methoxypropanol or butoxyethanol, and a $C_{2-4}$alkylene glycol such as ethylene glycol are preferred.

The ratio of the solvent components with different boiling points is not particularly limited to a specific one. In the case of using a solvent component having a boiling point of not lower than 100°C (a first solvent component) in combination with a solvent component having a boiling point lower than 100°C (a second solvent component), the ratio of the first solvent component relative to the second component (when each of the first and second solvent components comprises a plurality of components, the ratio is defined as a weight ratio of the total first solvent components relative to the total second solvent components) may be, for example, about 10/90 to 70/30, preferably about 10/90 to 50/50, and more preferably about 15/85 to 40/60 (particularly about 20/80 to 40/60).

Moreover, when a liquid mixture or coating liquid is coated on a transparent support, a solvent in which the transparent support does not dissolve, corrode or swell may be selected according to the species of the transparent support. For example, when a cellulose triacetate film is employed as the transparent support, tetrahydrofuran, methyl ethyl ketone, isopropanol, toluene or the like is used as a solvent for the liquid mixture or the coating liquid and thus the anti-glare film can be formed without deteriorating properties of the film.

(Viscosity and concentration of solution)

According to the present invention, in generation of convection, it is preferable that the viscosity of the solution be moderately high for maintaining the uneven surface due to convection, and it is preferable that the viscosity of the solution be moderately low for flowing and circulating generated convection without stagnation. In order to ensure such a viscosity of the solution, the solid content of the solution may be, for example, about 5 to 50% by weight, preferably about 10 to 40% by weight, and more preferably about 15 to 35% by weight.

(Coating thickness)

In order to generate cellular rotating convection with a desired size, the coating thickness of the solution may be, for example, about 10 to 200 $\mu$m, preferably about 15 to 100 $\mu$m, and more preferably about 20 to 50 $\mu$m. With the use that the aspect ratio of the convection cell becomes 2 to 3, an uneven surface (or uneven pattern) in which the distance between adjacent projections is about 50 $\mu$m can be obtained by coating of the solution on the support at a coating thickness of about 20 to 50 $\mu$m. The thickness of the coating film becomes thin due to evaporation of part of the solvent (or solvent component) with a lower boiling point in the solution, and concurrently the evaporation generates a temperature difference between the upper and the lower layers of the coating film, as a result, cellular rotating convection having a size of about 50 $\mu$m can be generated.

(Method for imparting anisotropy)

In order to impart anisotropy to the anti-glare layer, the solution is coated on the support, and then the resulting wet coating film is tilted at a predetermined angle (e.g., about 30 to 90 degrees, preferably about 45 to 90 degrees, more preferably about 60 to 90 degrees, and usually about 90 degrees) with respect to the horizontal plane before curing the coating film (for example, in the drying step, or as a step before the drying step).

The coating method may include a conventional manner, for example, a roll coater, an air knife coater, a blade coater, a rod coater, a reverse coater, a bar coater, a comma coater, a dip and squeeze coater, a die coater, a gravure coater, and a silkscreen coater. Among these methods, a bar coater or a gravure coater is used widely. In general, in the production of the anti-glare layer, cellular convection tends to be arranged in a machine direction (a MD direction of the film, or a moving direction of a coater such as bar coater). Therefore, with respect to a gravitational direction, it is preferred to tilt the coating film toward a direction at which the plane direction of the coating film, particularly the machine direction, is almost parallel with the gravitational direction (that is, to hold the end of the coating film in the machine direction for lifting and tilting).

As the method for imparting anisotropy, there is usually employed a method which comprises forming a coating film on a support by such a coating method, and then tilting the resulting wet coating film at an angle of almost 90 degrees (or almost perpendicular) with respect to the horizontal plane, that is, tilting (raising) the resulting wet coating film so that the plane direction of the coating film is almost parallel to the gravitational direction, and placing the wet coating film for a predetermined time to generate cellular rotating convection. Such a tilting step of the wet coating film is preferably carried out immediately after coating the coating solution. Further, although such a placing step may be conducted in the drying step (e.g., a heating step using a dryer), the step is preferably carried out as a step before the drying step, e.g., before putting the coating film in a dryer, at an ambient temperature or room temperature (e.g., about 0 to 40°C and preferably about 5 to 30°C).

Specifically, the method may comprise coating a coating solution on a support film by using a coater, lifting one end of the support film (particularly, one end in the machine direction, that is, one side perpendicular to the machine direction), immediately suspending the coated support film, leaving the coated support film for a predetermined time, and putting the coated support film in a dryer. Moreover, in the case of using a continuous coating machine, the method may comprise coating a coating solution on a support, transferring the coated support so that the plane direction of the wet coating film is almost parallel to the gravitational direction in the process of upward transferring the support by a carrying machine (such as a conveyer) continuously, and carrying the support in a drying furnace. Such a transferring is ensured by disposing an entrance to the drying furnace in the upper side of the coater head.

In the case where the wet coating film is placed to the above-mentioned direction so that the film is subjected to the gravitational action, it can be presumed that the convection cell is longitudinally extended by a gravity, while the mechanism that expresses anisotropy to the anti-glare layer is poorly understood. The time for placing the wet coating film in the above-mentioned direction (usually, the time until put the coated support in a dryer after placing the coated support) may be selected within the range of about 1 second to 10 minutes, for example, is about 5 seconds to 5 minutes, preferably about 10 to 60 seconds, and more preferably about 10 to 40 seconds (particularly about 15 to 30 seconds).

In the present invention, the degree of anisotropy can be controlled by adjusting the tilt angle, the placing time, the temperature, and others in such a method.

(Drying temperature)

The cellular rotating convection and phase separation is preferably induced by casting or coating the solution, and then evaporating the solvent at a temperature lower than the boiling point of the solvent [for example, at a temperature lower than a boiling point of a solvent having a higher boiling point by about 1 to 120°C (preferably about 5 to 80°C and particularly about 10 to 60°C)]. For example, depending on the boiling point of the solvent, the coating film may be dried at a temperature of about 30 to 200°C, preferably about 40 to 120°C and more preferably about 50 to 100°C.

Firstly, in order to generate cellular rotating convection, after casting or coating the solution on the support, it is not preferable that the coating film be immediately put in a dryer such as an oven for dryness, but preferable that the coating film be put in a dryer after allowing the coating film to stand for a predetermined time (e.g., for about 1 second to 1 minute, preferably about 3 to 30 seconds and more preferably about 5 to 20 seconds) at an ambient temperature or room temperature (e.g., about 0 to 40°C and preferably about 5 to 30°C) (particularly, after placing the wet coating film with the wet coating film tilted with respect to the horizontal plane as mentioned above).

Moreover, the dry air flow rate is not particularly limited to a specific one. In the case where the air flow rate is too high, the coating film is dried and solidified before enough generation of rotating convection. Accordingly, the dry air flow rate may be not higher than 50 m/minute (e.g., about 1 to 50 m/minute), preferably about 1 to 30 m/minute and more preferably about 1 to 20 m/minute. The angle of the dry wind blown against the anti-glare film is not particularly limited to a specific one. For example, the angle may be parallel or perpendicular to the film.

In particular, for generating cellular rotating convection, it is preferred to dry the coating film in the presence of a solvent under an external force which does not inhibit formation of convection cell or an external force which does not inhibit convection in a phase separation region, for example, under a calm or a low air flow rate. That is, specifically, cellular rotating convection can be generated by heating the coating film under a calm or low air flow rate (e.g. , about 0.1 to 8 m/minute, preferably about 0.5 to 6 m/minute and more preferably about 1 to 5 m/minute) in a dryer having the above-mentioned drying temperature. Incidentally, instead of drying the film under a low air flow rate, the angle of the dry wind blown against the film may be set up as a low angle, for example, not larger than 70°, preferably about 5 to 60° and more preferably about 10 to 50°. The heating time under a calm or low air flow rate may be, for example, about 1 second to 1 minute, preferably about 3 to 30 seconds and more preferably about 5 to 20 seconds (particularly about 7 to 15 seconds).

(Curing treatment)

After drying the solution, the coating film is cured or crosslinked by a thermic ray or an actinic ray (e.g., an ultraviolet ray, and an electron beam). The curing process may be selected depending on the species of the curable resin precursor, and a curing process by light irradiation such as an ultraviolet ray or an electron beam is usually employed. The general-purpose light source for exposure is usually an ultraviolet irradiation equipment. If necessary, light irradiation may be carried out under an inert gas atmosphere.

(Process for producing low refraction index layer)

The process for forming the low refraction index layer is not particularly limited to a specific one, and it is sufficient that a layer comprising at least the above-mentioned resin-based material is formed on the anti-glare layer. The low refraction index layer may be usually formed by coating or flow casting a coating liquid containing a low refraction index component on the anti-glare layer, and curing the coating film with heat (a thermal source) or an actinic ray.

The coating liquidmay usually comprise, in addition a low refraction index component (e.g., a fluorine-containing compound), an organic solvent [e.g., an organic solvent similar to a solvent exemplified in the paragraph of the anti-glare layer, depending on the species of the low refraction index resin], and further a reactive diluent [e.g., a (meth) acrylic monomer such as a polyfunctional (meth)acrylate]. Such a solvent may be evaporated and removed together with formation of the coating film. In the case where the solvent is a reactive diluent, the solvent may be cured by polymerization along with curing of a fluorine-containing resin precursor. The coating liquid may further comprise a curing agent [for example, a thermal polymerization initiator such as an organic peroxide; a photopolymerization initiator (e.g., a ketone-series polymerization initiator such as 1-hydroxy-cyclohexyl-phenyl-ketone)]. Moreover, the coating liquid may comprise a crosslinking agent, or others.

The concentration of the solid content (a low refraction index component, a curable compound, other additive (s)) in the coating liquid for a low refraction index layer may be selected within such a range that coating properties or others are not deteriorated, and for example, the concentration is about 0.1 to 50 wt.%, preferably 0.5 to 10 wt.%, and more preferably 1 to 5 wt.%.

[Optical member]

The anti-glare film of the present invention has uniform and high-definition anti-glareness because of having anisotropy about light scattering property and having an uneven surface in which each raised part is uniformly controlled by cellular rotating convection. Further, the anti-glare film has a high abrasion resistance (hardcoat property) and can control an intensity distribution of a transmitted scattered-light. In particular, the anti-glare film makes a scattered intensity at a particular angle range larger with allowing a transmitted light to transmit and scatter anisotropically. Further, the anti-glare film is excellent in clearness (or sharpness) of a transmitted image, and reduces blur of characters in a display surface (or visual surface). Moreover, in the case of forming a low refraction index layer on the anti-glare layer, reflection of an external light can be efficiently inhibited in the surface of the low refraction index layer. Therefore, the anti-glare film of the present invention is suitable for application of an optical member or others, and the above-mentioned support may also comprise a transparent polymer film for forming various optical members. The anti-glare film obtained in combination with the transparent polymer film may be directly used as an optical member, or may form an optical member in combination with an optical element [for example, a variety of optical elements to be disposed into a light path, e. g. , a polarizing plate, an optical retardation plate (or phase plate), and a light guide plate (or light guide)]. That is, the anti-glare film may be disposed or laminated on at least one light path surface of an optical element. For example, the anti-glare film may be laminated on at least one surface of the optical retardation plate, or may be disposed or laminated on an emerging surface (or emerge surface) of the light guide plate.

The anti-glare film having imparted abrasion resistance can be also performed as a protective film. The anti-glare film of the present invention is, therefore, suitable for utilizing as a laminate (optical member) in which an anti-glare film is used instead of at least one protective film among two protective films constituting a polarizing plate, that is, as a laminate (optical member) in which an anti-glare film is laminated on at least one surface of a polarizing plate.

[Display apparatus]

The anti-glare film of the present invention can be utilized for various display apparatuses or devices such as a liquid crystal display (LCD) apparatus, a cathode ray tube display, an organic or inorganic EL display, a field emission display (FED), a surface-conduction electron-emitter display (SED), a rear projection television display, a plasma display, and a touch panel-equipped display device. These display apparatuses comprise the anti-glare film or the optical member (particularly, e.g., a laminate of a polarizing plate and an anti-glare film) as an optical element. In particular, the anti-glare film can be preferably used for a liquid crystal display apparatus and others because the anti-glare film can inhibit reflection even in the case of being attached to a large-screen liquid crystal display apparatus such as a high-definition or high-definitional liquid crystal display.

Incidentally, the liquid crystal display apparatus may be a reflection-mode (or reflective) liquid crystal display apparatus using an external light (or outside light) for illuminating a display unit comprising a liquid crystal cell, or may be a transmission-mode (or transmissive) liquid crystal display apparatus comprising a backlight unit for illuminating a display unit. In the reflection-mode liquid crystal display apparatus, the display unit can be illuminated by taking in an incident light from the outside through the display unit, and reflecting the transmitted incident light by a reflective member. In the reflection-mode liquid crystal display apparatus, the anti-glare film or optical member (particularly a laminate of a polarizing plate and an anti-glare film) can be disposed in a light path in front of the reflective member. For example, the anti-glare film or optical member can be disposed or laminated, for example, between the reflective member and the display unit, or in front of the display unit.

In the transmission-mode liquid crystal display apparatus, the backlight unit may comprise a light guide plate (e.g., a light guide plate having a wedge-shaped cross section) for allowing a light from a light source (e.g., a tubular light source such as a cold cathode tube, a point light source such as a light emitting diode) incident from one side of the light guide plate and for allowing the incident light to emit from the front emerging surface. Moreover, if necessary, a prism sheet may be disposed in front of the light guide plate. Incidentally, a reflective member for allowing a light obtained from the light source to reflect to the emerging surface side is usually disposed on the reverse side of the light guide plate. In such a transmission-mode liquid crystal display apparatus, the anti-glare film or the optical member may be usually disposed or laminated into a light path in front of the light source. For example, the anti-glare film or optical member can be disposed or laminated between the light guide plate and the display unit, in front of the display unit, or others.

INDUSTRIAL APPLICABILITY

The present invention is useful for a variety of application in need of anti-glareness and light-scattering properties, e.g., for the optical member or an optical element of a display apparatus such as a liquid crystal display apparatus (in particular, a high-definition or high-definitional display apparatus).

EXAMPLES

The following examples are intended to describe this invention in further detail and should by no means be interpreted as defining the scope of the invention.

Example 1

In a mixed solvent containing 24.7 parts by weight of methyl ethyl ketone (MEK) (boiling point: 80°C), 5.2 parts by weight of 1-butanol (BuOH) (boiling point: 113°C) and 4. 5 parts by weight of 1-methoxy-2-propanol (boiling point: 119°C) were dissolved 5.88 parts by weight of an acrylic resin having a polymerizable unsaturated group (s) in a side chain thereof [a compound in which 3,4-epoxycyclohexenylmethyl acrylate is added to part of carboxyl groups in a (meth) acrylic acid-(meth)acrylate copolymer;manufactured by Daicel Chemical Industries, Ltd., CYCLOMER-P (ACA) 320M, solid content: 44.2% by weight, and solvent: 1-methoxy-2-propanol (MMPG) (boiling point: 119°C)], 0.8 part by weight of a cellulose acetate propionate (acetylation degree = 2.5%, propionylation degree = 46%, number average molecular weight in terms of polystyrene: 75,000; manufactured by Eastman, Ltd., CAP-482-20), 3.3 parts by weight of a polyfunctional acrylic UV curable monomer (manufactured by DAICEL-CYTEC Company, Ltd., DPHA), 3.3 parts by weight of a polyfunctional acrylic UV curable monomer (manufacturedbyDAICEL-CYTECCompany, Ltd., PETIA) and 0.5 part by weight of a photo initiator (manufactured by Ciba Specialty Chemicals K.K., IRGACURE 184). Incidentally, the cellulose acetate propionate and the acrylic resin are incompatible with each other, and the concentration of the resulting solution is accompanied by phase separability. The solution was coated on a cellulose triacetate film with the use of a wire bar #36, and then one end of the film (an end of the film in the machine direction) was immediately lifted up and the film was suspended vertically. The suspended film was held vertically for 30 seconds, and then the film was immediately put in an explosion-proof oven at 80°C at a fan wind speed of 4 m/minute and dried for one minute. Thereby a phase-separation structure was generated in a convection cell, and an about 10.5 $\mu$m thick coat layer having an uneven surface structure was formed. Following that, the coat layer was subjected to UV curing treatment for about 30 seconds by irradiating ultraviolet ray derived from a metal halide lump (manufactured by Eyegraphics Co., Ltd.) to form an anti-glare film having hardcoat property and an uneven surface structure.

Example 2

In a mixed solvent containing 25 parts by weight of methyl ethyl ketone (MEK), 5.24 parts by weight of 1-butanol (BuOH) and 3 parts by weight of 1-methoxy-2-propanol were dissolved 5.66 parts by weight of an acrylic resin having a polymerizable unsaturated group(s) in a side chain thereof [a compound in which 3,4-epoxycyclohexenylmethyl acrylate is added to part of carboxyl groups in a (meth)acrylic acid-(meth)acrylate copolymer; manufactured by Daicel Chemical Industries, Ltd., CYCLOMER-P (ACA) 320M, solid content: 44.2% by weight, and solvent: 1-methoxy-2-propanol (MMPG) (boiling point: 119°C)], 0.6 part by weight of a cellulose acetate propionate (acetylation degree = 2.5%, propionylation degree = 46%, number average molecular weight in terms of polystyrene: 75,000; manufactured by Eastman, Ltd., CAP-482-20), 2.76 parts by weight of a polyfunctional acrylic UV curable monomer (manufactured by DAICEL-CYTEC Company, Ltd., DPHA), 2.76 parts by weight of a polyfunctional acrylic UV curable monomer (manufactured by DAICEL-CYTEC Company, Ltd., PETIA) and 0.4 part by weight of a photo initiator (manufactured by Ciba Specialty Chemicals K.K., IRGACURE 184). The resulting solution was used for coating by a pilot machine. Incidentally, the pilot machine is equipped with a coater head for a microgravure application (No. 45) and a drying furnace (temperature: 70°C, fan wind speed: 4 m/minute) having a length of 10 m. Further, the entrance to the drying furnace was positioned almost right above the coater head, and the path of the film was as follows: the film was coated by the coater head and was moved through a distance of 30 cm, the film was lifted up vertically so that the film was allowed to stand vertically (in the state that the machine direction of the film was almost parallel to the gravitational direction), the film was moved (was moved upwards) through a distance of about 2 m, and then the film entered the drying furnace. With the use of this pilot machine, the solution was coated on a cellulose triacetate film at a linear velocity of 6 m/minute to form an about 10 $\mu$m thick coat layer having an uneven surface structure. Following that, the coat layer fed from the drying furnace was subjected to UV curing treatment for about 30 seconds by irradiating ultraviolet ray derived from a metal halide lump (manufactured by Eyegraphics Co., Ltd.) to form an anti-glare film having hardcoat property and an uneven surface structure.

Comparative Example 1

A 10.5 $\mu$m thick coat layer was formed in the same manner as Example 1 except that the cellulose triacetate film was allowed to stand for 30 seconds without suspending vertically after coating the solution on the film and put in the explosion-proof oven at 80°C at a fan wind speed of 4 m/minute. Following that, the coat layer was subjected to UV curing treatment for about 30 seconds by irradiating ultraviolet ray derived from a metal halide lump (manufactured by Eyegraphics Co., Ltd.) to form an anti-glare film having hardcoat property and an uneven surface structure.

Example 3

A coating liquid containing a thermosetting fluorine-containing compound ("LR204-6" manufactured by Nissan Chemical Industries, Ltd., solid content: 1% by weight) as a low refraction index layer was coated on the coat layer, having hardcoat property and an uneven surface structure, obtained in Example 1 with the use of a wire bar #5. The coated product was dried, and then hot-cured (or heat-cured) at 90°C for 5 minutes to give a low-reflection anti-glare film.

Comparative Example 2

A coating liquid containing a thermosetting fluorine-containing compound ("LR204-6" manufactured by Nissan Chemical Industries, Ltd., solid content: 1% by weight) as a low refraction index layer was coated on the coat layer, having hardcoat property and an uneven surface structure, obtained in Comparative Example 1 with the use of a wire bar #5. The coated product was dried, and then hot-cured (or heat-cured) at 90°C for 5 minutes to give a low-reflection anti-glare film.

Each of anti-glare films obtained in above-mentioned Examples and Comparative Examples was evaluated by the following items. The results are shown in Table 1.

[Total light transmittance and haze]

The total light transmittance and haze were measured by using a haze meter (manufactured by Nippon Denshoku Industries Co., Ltd., trade name "NDH-5000W").

[Image clarity]

The image clarity of the anti-glare film was measured in accordance with JIS K7150 by using an image clarity measuring apparatus (manufactured by Suga Test Instruments Co., Ltd., trade name "ICM-1DD") provided with an optical slit (the slit width = 0.25 mm, 0.5 mm). The image clarity was measured in the following two methods: (method 1) the film was installed so that the machine direction of the film was parallel to the teeth direction of the optical slit, and (method 2) the film was installed so that the machine direction of the film was perpendicular to the teeth direction of the optical slit. The difference (absolute value) in image clarity between these methods was calculated.

[Transmitted scattering profile]

Based on transmitted scattered-light intensities at emission angles of 0° and 30° measured by using a goniophotometer (manufactured by Murakami Color Research Laboratory, "GP-200"), the transmitted scattering profile (or property) of the anti-glare film was determined as the ratio of these scattered-light intensities.

[Evaluation for mounting]

Regarding each of the anti-glare films, the back side of the film was subjected to adhesion treatment, and the treated film was attached to a surface of a 20-inch VA (vertically aligned) LCD panel (having a front luminance of 450 cd/m$^2$, a contrast of 400/1 and a resolution of 60 ppi) so that the machine direction (MD direction) of the anti-glare layer was a direction perpendicular to the gravitational direction (that is, the MD direction was parallel to the horizontal direction). Then, dazzle and anti-glareness were evaluated by the following methods.

(Dazzle)

Green or white color image was displayed on the panel screen, and observed at a distance of one meter from the screen. The visual evaluation on dazzle was conducted on the basis of the following criteria.

"A": No dazzles.
"B": Dazzle is recognized in a degree hardly recognizable.
"C" : Dazzle is recognized in a degree recognizable.
"D": Strong dazzle is recognized, and is very uncomfortable.

(Anti-glareness)

A fluorescent lamp was fixed to the ceiling so that the fluorescent lamp was positioned at a distance of 5 meters in an obliquely upward direction from the panel screen. The reflected light of the lamp on the surface of the LCD panel (power-off or black display) was observed, and blurring of the reflected outline of the fluorescent lamp was evaluated on the basis of the following criteria.

"A": No reflected outline of the fluorescent lamp is recognized.
"B" : The reflected outline of the fluorescent lamp is slightly recognized in a degree hardly recognizable.
"C": The reflected outline of the fluorescent lamp is recognized in a degree recognizable.
"D" : The strongly reflected outline of the fluorescent lamp is recognized, and is very uncomfortable.

[Table 1]

Table 1

| | | Ex. 1 | Ex. 2 | Com. Ex. 1 | Ex. 3 | Com. Ex. 2 |
|---|---|---|---|---|---|---|
| Main solvent | | MEK | MEK | MEK | MEK | MEK |
| Solvent having a boiling point of not lower than 100°C | Species | BuOH, MMPG | BuOH, MMPG | BuOH, MMPG | BuOH, MMPG | BuOH, MMPG |
| | Solvent ratio | 34% | 31% | 34% | 31% | 34% |
| Drying furnace | | 80°C Wind speed: 4 m/min. | 70°C Wind speed: 4 m/min. Furnace length: 10 m | 80°C Wind speed: 4 m/min. | Same as Ex. 1 | Same as Com. Ex. 1 |
| Process from coating to drying | | Lifting up and suspending vertically, and holding for 30 sec. | Moving upwards through a distance of 2 m by a continuous system (6 m/min.) | Holding for 30 sec. without suspending vertically | Same as Ex. 1 | Same as Com. Ex. 1 |
| Phase separability of solution | | Presence | Presence | Presence | Presence | Presence |
| Low refraction index layer | | Absence | Absence | Absence | Presence | Presence |
| Total light transmittance (%) | | 90.5 | 90.5 | 90.5 | 93.2 | 93.2 |
| Haze (%) | | 8 | 12 | 9 | 6 | 7 |
| Image clarity | Method 1 (parallel) — 0.5 mm | 35 | 30 | 38 | 39 | 42 |
| | Method 1 (parallel) — 0.25 mm | 37 | 30 | 39 | 40 | 43 |
| | Method 2 (Perpendicular) — 0.5 mm | 46 | 51 | 38 | 49 | 42 |
| | Method 2 (Perpendicular) — 0.25 mm | 47 | 52 | 39 | 51 | 43 |
| | Difference between methods 1 and 2 — 0.5 mm | 11 | 21 | 0 | 10 | 0 |
| | Difference between methods 1 and 2 — 0.25 mm | 10 | 22 | 0 | 11 | 0 |
| Transmitted scattered-light Intensity | Intensity at 0° ($I_0$) | 60000 | 57000 | 60000 | 64000 | 64000 |
| | Intensity at 30° ($I_{30}$) | 0.15 | 0.12 | 0.14 | 0.09 | 0.10 |
| | Intensity ratio ($I_{30}/I_0$) | 0.00025% | 0.00021% | 0.00023% | 0.00014% | 0.00015% |
| Evaluation for mounting | Dazzle | B | B | C | B | C |
| | Anti-glareness | B | A | C | A | C |

As apparent from results in Table 1, the anti-glare films of Examples 1 to 3 have no dazzle and are high in anti-glareness. On the other hand, in the anti-glare films of Comparative Examples 1 and 2, both dazzle and reflection are recognized in a degree recognizable.

**Claims**

1. An anti-glare film comprising an anti-glare layer which comprises
a matrix comprising a polymer, and
a plurality of domains which are phase-separated from the matrix and comprise a polymer,
wherein the domains and the matrix form an uneven surface in the anti-glare layer, and
the film varies an image clarity measured by an image clarity measuring apparatus provided with an optical slit depending on an installation direction of the film with respect to the optical slit.

2. An anti-glare film according to claim 1, wherein, in an image clarity measured by an image clarity measuring apparatus provided with an optical slit of 0.5 mm width, the difference (absolute value) of the image clarity before and after changing the installation direction of the film with respect to the optical slit by 90 degrees is 1 to 30.

3. An anti-glare film according to claim 1, which has anisotropy in a scattered intensity of a reflected light from the film surface.

4. An anti-glare film according to claim 1, wherein at least one uneven part generated by phase separation is formed within the domain(s).

5. An anti-glare film according to claim 1, wherein the anti-glare layer is a cured product of at least one polymer and at least one curable resin precursor.

6. An anti-glare film according to claim 5, which has an uneven surface formed by curing the curable resin precursor.

7. An anti-glare film according to claim 5, wherein the polymer comprises a plurality of polymers capable of phase separation from each other, and the curable resin precursor is compatible with at least one polymer of the plurality of polymers.

8. An anti-glare film according to claim 7, wherein at least one polymer of the plurality of polymers has a functional group participating in a curing reaction of the curable resin precursor.

9. An anti-glare film according to claim 7, wherein at least one polymer of the plurality of polymers has a (meth)acryloyl group.

10. An anti-glare film according to claim 7, wherein the plurality of polymers capable of phase separation from each other comprise a cellulose derivative and at least one resin selected from the group consisting of a styrenic resin, a (meth)acrylic resin, an alicyclic olefinic resin, a polycarbonate-series resin, and a polyester-series resin; and at least one polymer of the plurality of polymers has a polymerizable group.

11. An anti-glare film according to claim 1, which further comprises a support comprising a transparent polymer film, wherein the anti-glare layer is formed on the support.

12. An anti-glare film according to claim 1, which further comprises a resin layer having a low refraction index formed on the anti-glare layer.

13. An anti-glare film according to claim 12, wherein the resin layer comprises a resin having a refraction index of 1.3 to 1.47.

14. An anti-glare film according to claim 1, wherein the total light transmittance is 70 to 100%, the haze is 1 to 30%, and the image clarity measured by an image clarity measuring apparatus provided with an optical slit of 0.5 mm width is 10 to 70%.

15. An anti-glare film according to claim 1, wherein, when a light enters and penetrates the anti-glare film, part of the incident light generates grating diffraction at an angle of 0.01 to 1°; and the ratio of a scattered light intensity at an emission angle of 30° ($I_{30}$) relative to a light intensity at an emission angle of 0° ($I_0$) in a scattered light profile ($I_{30}/I_0$) is 0.00001 to 0.001%.

16. An anti-glare film according to claim 1, which is used for at least one display device or apparatus selected from the group consisting of a liquid crystal display apparatus, a cathode ray tube display, an organic electroluminescence display, a field emission display, a surface-conduction electron-emitter display, a rear projection television display, a plasma display and a touch panel-equipped input device.

17. A process for producing an anti-glare film recited in claim 1, which comprises tilting a wet coating film comprising a solution containing at least one polymer, at least one curable resin precursor and a solvent with respect to the horizontal plane, and generating a cellular rotating convection in the wet coating film in a step for drying the wet coating film.

18. A process according to claim 17, which comprises coating a solution containing a plurality of polymers capable of phase separation from each other, at least one curable resin precursor and a solvent having a boiling point of not lower than 100°C on a support, placing the resulting wet coating film at a slope of 10 to 90 degrees with respect to the horizontal plane, generating cellular rotating convection in the wet coating film in a step for drying the wet coating film, and then curing the coating film.

19. A process according to claim 17, wherein the solvent comprises at least two solvent components with different boiling points.

20. A process according to claim 17, wherein the coating film is cured by an action of at least one selected from the group consisting of an actinic ray and a thermic ray.

F I G. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11337734 A
- JP 2001215307 A
- JP 7027920 A

- JP 2004126495 A